# EUROPEAN PATENT SPECIFICATION

(11) **EP 4 450 137 B1**
(45) Date of publication and mention of the grant of the patent: **27.05.2026**
(21) Application number: 23739881.3
(22) Date of filing: 05.01.2023
(51) Int. Cl.: G06F 3/0482, G06F 3/04845, G06F 3/0486, G06F 3/04883, G06F 3/04842, G06F 3/04886

(54) **SPLIT-SCREEN SPECIAL EFFECT PROP GENERATING METHOD AND APPARATUS, DEVICE, AND MEDIUM**
VERFAHREN UND VORRICHTUNG, VORRICHTUNG UND MEDIUM ZUR ERZEUGUNG VON SPEZIALEFFEKTEN AUF EINEM GETEILTEN BILDSCHIRM
PROCÉDÉ ET APPAREIL DE GÉNÉRATION D'ACCESSOIRE À EFFET SPÉCIAL À ÉCRAN DIVISÉ, DISPOSITIF ET SUPPORT

(30) Priority: 12.01.2022 CN 202210030876
(43) Date of publication of application: 23.10.2024
(73) Proprietor: Beijing Zitiao Network Technology Co., Ltd., Beijing 100190 (CN)
(72) Inventor: QIN, Yuwen, Beijing 100086 (CN); ZHAO, Nan, Beijing 100086 (CN); XU, Jiancong, Beijing 100086 (CN); LIU, Gao, Beijing 100086 (CN); WANG, Yujia, Beijing 100086 (CN)
(74) Representative: Marks & Clerk LLP
(86) International application number: PCT/CN2023/070692
(87) International publication number: WO 2023/134537

(56) References cited:
- CN-A- 110 442 817
- CN-A- 113 190 314
- CN-A- 113 240 777
- CN-A- 113 497 898
- US-A1- 2020 285 858
- US-B1- 6 714 201

## Description

### FIELD OF THE INVENTION

The present disclosure relates to the field of computer technology, and in particular to a split-screen effect generation method, apparatus, device, and medium.

### BACKGROUND

With development of computer technology, there have been many virtual effects based on augmented reality, for example, a split-screen effect that displays multiple sub-screens in the same screen with each sub-screen having different display effects, so as to enrich presentation effects and interestingness of images/videos produced by people.

US 6714201 B1 discloses a hierarchical 3D graphic model, which can be viewed as a hierarchical graph of its nodes and their associated motions, with the mathematical type of motions graphically indicated. A user can click on a displayed motion to edit it. Motions can be defined by successive calls to an API and then be saved in a file.

### DISCLOSURE OF THE INVENTION

The present disclosure provides a generating a split-screen effect method according to the appended claims, an apparatus and electronic device, a computer-readable storage medium, and a computer program product thereof.

### DESCRIPTION OF THE DRAWINGS

The above and other features, advantages and aspects of the embodiments of the present disclosure will become more apparent with reference to the accompanying drawings and with reference to the following detailed description. Throughout the drawings, the same or similar reference numerals indicate the same or similar elements. It should be understood that the drawings are schematic and that the components and elements are not necessarily drawn to scale.
FIG. 1 is a schematic flowchart of a split-screen effect generation method provided by an embodiment of the present disclosure;
Fig. 2 is a schematic diagram illustrating an effect production interface provided by an embodiment of the present disclosure;
Fig. 3 is a schematic diagram illustrating association relationship between effect materials in a split-screen effect provided by an embodiment of the present disclosure;
FIG. 4 is a schematic structural diagram of a split-screen effect generation apparatus provided by an embodiment of the present disclosure;
FIG. 5 is a schematic structural diagram of an electronic device provided by an embodiment of the present disclosure.

### DETAILED DESCRIPTION OF PREFERRED EMBODIMENTS

Embodiments of the present disclosure will be described with reference to the drawings in detail. Although some embodiments of the present disclosure have been illustrated in the drawings, it shall be understood that the present disclosure can be implemented in a variety of manners, and shall not be interpreted as being limited to the embodiments illustrated herein, on the contrary, these embodiments are provided for the purpose of more thoroughly and completely understanding the present disclosure. It shall be understood that the drawings and embodiments of the present disclosure are only used for illustration, and do not constitute a limitation on the present disclosure.

It should be understood that the various steps described in the method embodiments of the present disclosure may be performed in different orders, and/or performed in parallel. Furthermore, the method embodiments can include additional steps, and/or the execution of the illustrated steps may be omitted. The scope of the present disclosure is not limited in this respect.

The term "include" and the variations thereof used in the present disclosure are open-ended terms, that is, "including but not limited to". The term "one embodiment" means "at least one embodiment"; the term "another embodiment" means "at least one further embodiment"; the term "some embodiments" means " at least some embodiments". Related definitions of other terms will be given hereinafter.

It should be noted that concepts such as "first" and "second" mentioned in the present disclosure are only used to distinguish different apparatuses, modules, or units, instead of being used to limit the sequence or interdependence of functions performed by these apparatuses, modules, or units.

It should be noted that the modifiers "one" and "a plurality of" mentioned in the present disclosure are schematic and non-limiting, and those skilled in the art shall understand that, unless otherwise clearly indicated in the context, it should be understood as "one or more".

The names of messages or information exchanged between the plurality of apparatuses in embodiments of the present disclosure are for illustrative purposes only and are not intended to limit the scope of the messages or information.

The current split-screen effects are mainly generated by setting effects for each sub-screen, which may be subject to effect production problems such as complex effect production process and high production difficulty, etc., and there may also exist a problem of large consumption of device resources by split-screen effects because there are many effects in each sub-screen and may be repeated, and so on.

Specifically, the current scheme for generating split-screen effects is mainly to split a screen to create at least two sub-screens, and then add required effect materials for each sub-screen. However, this scheme needs to, for each sub-screen, independently set the effect materials that need to be loaded for each sub-screen. If there are the same effect materials, for example, effect materials such as filters for faces and cosmetic contact lenses, etc., in each sub-screen, then it is necessary to load and set the same effect materials in each sub-screen, which cause the process of producing split-screen effects by the user, such as persons producing effects, to be relatively complicated, and the efficiency of generating split-screen effect materials is relatively low. Moreover, because the effect materials in each sub-screen need to be processed independently, the above-mentioned same effect materials will be drawn and rendered many times repeatedly, resulting in excessive consumption of device resources and reducing device performance.

Based on the above situation, an embodiment of the present disclosure provides a split-screen effect generation scheme, so that in the process of producing split-screen effects, the same effect material that needs to be loaded in each sub-screen can be loaded under a split-screen model other than the sub-screen, which causes the same effect material to be at the same display level as the sub-screen, therefore, the same effect material only needs to be added and set once, which improves the production efficiency of split-screen effects and reduces the consumption of device resources during the production and usage of split-screen effects, thereby improves the device performance.

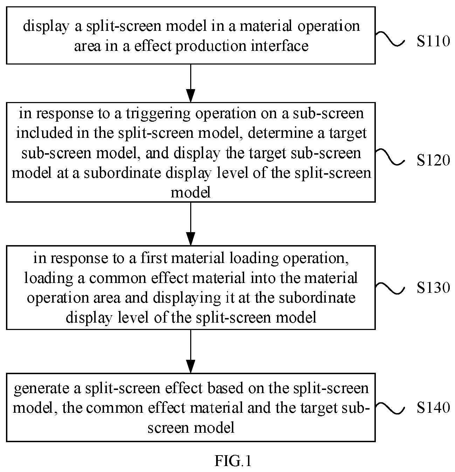

A split-screen effect generation method provided by embodiments of the present disclosure will be firstly described below with reference to FIGS. 1-3.

In an embodiment of the present disclosure, the split-screen effect generation method is applicable to a case of producing a split-screen effect in which there are multiple sub-screens in one screen. The method can be executed by a split-screen effect generation apparatus, the apparatus can be implemented in the form of software and/or hardware, and the apparatus can be integrated in an electronic device capable of installing an effect production software. The electronic device may include, but not limited to, devices such as smartphones, tablets, laptops, desktop computers, and the like.

FIG. 1 is a schematic flowchart of a split-screen effect generation method provided by an embodiment of the present disclosure. As shown in FIG. 1, the split-screen effect generation method may include the following steps:
S110. display a split-screen model in a material operation area in an effect production interface.

Among them, the effect production interface is an interactive interface provided by a tool/ an application for producing effects. The material operation area is an area in the effect production interface, which is used to provide interactive operation functions and display the materials (that is, effect materials) required for producing split-screen effects, such as a split-screen model, at least two sub-models contained in the split-screen model, filter materials, eye makeup materials, or the like. The split-screen model is a preset model that splits one screen into at least two sub-screens. The sub-screen model is a model corresponding to the split sub-screen, for example, may be a preset three-dimensional mesh model.

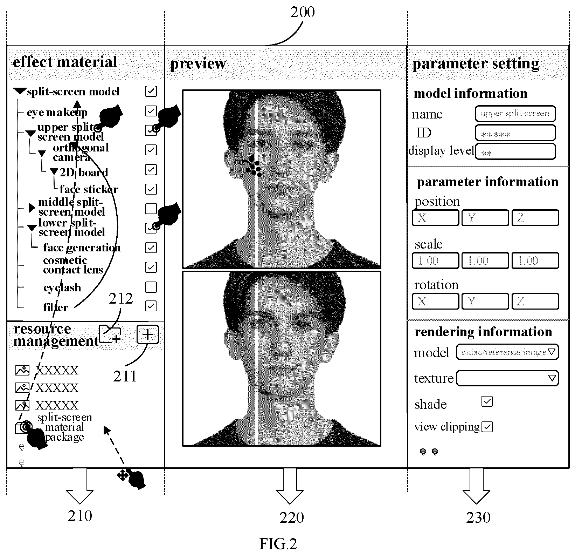

Specifically, when a user needs to product a split-screen effect, the user can start the effect production tool, such as starting the effect production application in an electronic device, or the user can also trigger production push information corresponding to the effect, such as clicking an effect production interface corresponding to the effect. **In** this way, the electronic device can display an application program interface, that is, an effect production interface for producing effects. The effect production interface at least includes a material operation area. As shown in FIG. 2, an effect production interface 200 is displayed on the electronic device, and a material operation area 210 is displayed on the left side of the effect production interface 200.

Afterwards, in response to a third material loading operation on the effect production interface, the electronic device loads the split-screen model into the material operation area and displays it. The third material loading operation here is an interactive operation of importing the split-screen model into the material operation area. The user can perform the third material loading operation through a control set in the effect production interface related to the material loading function.

In some embodiments, the user may first perform a material import operation, so as to import each effect material required for producing the split-screen effect into the effect production tool. Then, the third material loading operation can be performed on the split-screen model in the imported effect materials, so as to load the split-screen model into the material operation area.

Continuing to refer to FIG. 2, the material operation area 210 displays two subareas of "effect material" and "resource management" therein, which are respectively an area corresponding to the material editing function and an area corresponding to the material import function. In the upper right corner of the "resource management" sub-area, there are material import function controls, that is, a file import control 211 and a folder import control 212. The user can click the file import control 211 or the folder import control 212 to perform material import operation. Alternatively, A reminder message such as "drag material here" can be disposed at a certain position in the "resource management" sub-area, to remind users that they can directly drag the effect material they want to import to the "resource management" sub-area, so that the user can also perform the material import operation by dragging the material. After having detected the user's material import operation, the electronic device receives the split-screen material package imported in the material import operation (which may include various effect materials required by the split-screen effect), and displays it in the "resource management" sub-area in the material operation area 210.

Afterwards, in order to facilitate a visualization operation, the electronic device can further detect the user's third material loading operation, and in response to the third material loading operation, load the split-screen model to be loaded from the "resource management" sub-area to the "effect material" sub-area. The third material loading operation may include a double-click operation, a right-click operation, or a drag-and-drop operation, etc. In this way, the electronic device can display the "split-screen model" in the "effect material" sub-area, and the "split-screen model" includes "upper sub-screen model", "middle sub-screen model" and "lower sub-screen model", that is, respective sub-screen model whose screen can be split are pre-configured in the split-screen model.

In some other embodiments, when the material operation area is one area, the user can directly load the split-screen model into the material operation area through the above material import operation and display it.

S120. in response to a triggering operation on a sub-screen included in the split-screen model, determine a target sub-screen model, and display the target sub-screen model at a subordinate display level of the split-screen model.

Wherein, the target sub-screen model is a sub-screen model used to produce a split-screen effect, which is at least a part of various sub-screen model included in the split-screen model.

Specifically, the split-screen model includes multiple sub-screen models, and the user can perform a trigger operation, for example, a selection operation such as single-click, double-click, check, and so on, on at least one of these sub-screen models as required. At this time, the electronic screen can detect the above-mentioned trigger operation, and determine a sub-screen model corresponding to the trigger operation as the target sub-screen model. Then, the electronic device displays the target sub-screen model at a lower display layer of the split-screen model displayed in the material operation area. Such a display mode is convenient for the user to intuitively understand the number of sub-screens contained in the split-screen effect to be produced and the relationship with the split-screen model.

Referring to FIG. 2, "upper sub-screen model", "middle sub-screen model" and "lower sub-screen model" are displayed at a subordinate display level of "split-screen model" in the material operation area 210. The user checks the check boxes corresponding to the "upper sub-screen model" and "lower sub-screen model". The electronic device can detect the check operation. In this way, the electronic device can determine "upper sub-screen model" and "lower sub-screen model" as target sub-screen models, and display them at the subordinate display level of "split-screen model".

It should be noted that, while determining and displaying the target sub-screen model, the electronic device may establish an association relationship between the split-screen model and the target sub-screen model, and the association relationship includes the above-mentioned upper-lower display hierarchy relationship. For example, the association relationship between the split-screen model and the target sub-screen model can be implemented as a parent-child node relationship, the split-screen model at the upper display level is the parent node, and the target sub-screen model at the lower display level is the child node.

In some embodiments, after S120, the split-screen effect generation method further includes: in response to a triggering operation on the target sub-screen model, displaying a parameter setting area corresponding to the target sub-screen model in the effect production interface; in response to a parameter setting operation on a target parameter displayed in the parameter setting area, determining a target parameter value, and updating the target sub-screen model based on the target parameter value.

Wherein, the target parameter may be a modifiable parameter in the target sub-screen model, such as position, size, rotation angle, etc. The target parameter value is the value of the target parameter.

Specifically, the electronic device provides a parameter setting function for the target sub-screen model, so that the user can adjust the target sub-screen model. Referring to FIG. 2, when the user wants to set "upper sub-screen model", the user can perform a trigger operation, such as single click, double-click and so on, on it. After having detected the trigger operation, the electronic device can display parameter setting modules for target parameters corresponding to the "upper sub-screen model", such as "model information", "parameter information" and "rendering information", etc., in a parameter setting area 230 displayed in the effect production interface 200, each parameter setting module contains certain parameters, and among these parameters, a parameter for which a parameter value modification function has been provided may be the target parameter, such as "position", "rotation", "zoom" in the parameter setting module for "parameter information", "model", "material", "shadow" in the parameter setting module for "rendering Information", etc. If the user wants to modify the value of a certain target parameter, the user will perform parameter setting operations, such as inputting, modifying, deleting, checking, or the like, on the parameter value. Therefore, the electronic device can detect the parameter setting area 230. After it detects the above parameter setting operation, it can determine the target parameter and its parameter setting result (that is, the target parameter value) according to the parameter setting operation. Afterwards, the electronic device can update the target sub-screen model according to the target parameter value, so that its display meets user requirements, and a personalized sub-screen model can be obtained conveniently, thereby improving the degree of personalization of subsequent split-screen effects.

S130. in response to a first material loading operation, loading a common effect material into the material operation area and displaying it at the subordinate display level of the split-screen model.

Wherein, the first material loading operation is an interactive operation of importing common effect materials to the subordinate display level of the split-screen model in the material operation area. The common effect material refers to an effect material shared by respective target sub-screen models, which is the effect material acting on each target sub-screen model, that is, the same effect material that should be loaded in each target sub-screen model.

Specifically, as described above, in related technologies, multiple effect materials need to be loaded under each target sub-screen model, and there are common effect materials among these effect materials, which will lead to repeated processing of these effect materials, such as loading, parameter setting and rendering, etc., and in turn leads to a complicated production process of split-screen effects and more resources consumed by rendering. Based on this, the embodiments of the present disclosure uniformly load the above-mentioned common effect material to the subordinate display level of the split-screen model, that is, load the common effect material outside the target sub-screen model, rather than the subordinate display level of the target sub-screen model, so that the common effect material can be at the same display level as the target sub-screen model. In this way, regardless of whether the common effect material is to be rendered before or after the target sub-screen model, it can be applied to each target sub-screen model, which is equivalent to loading the common effect material under each target sub-screen model, while the material processing operations such as loading of common effect materials and parameter settings, etc. only needs to be performed once, thereby greatly reduce the operation steps in the production process of split-screen effects, in turn reducing the complexity and difficulty of producing split-screen effects, and thus improving the production efficiency of split-screen effects.

During specific implementation, the user can perform the first material loading operation in the material operation area. For example, from the "Resource Management" sub-area shown in FIG. 2, some effect materials can be directly loaded under the "split-screen model" in the "effect material" sub-area, by means of operations, such as dragging the effect material, or selecting the split-screen model and double-clicking the effect material, or the like. In another example, some effect materials can be directly loaded from outside of the effect production interface to the bottom of the split-screen model in the material operation area. In this way, the electronic device can detect the above first material loading operation, determine the above loaded effect material as the common effect material, and display it at the subordinate display level of the split-screen model.

The display order of the common effect material and the target sub-screen model is not limited. For example, the common effect material can be displayed before the target sub-screen model, and can also be displayed after the target sub-screen model. Specifically, the display position of the common effect material in the material operation area may be the result of the user performing the first material loading operation, that is, the position where the user loads the common effect material under the split-screen model. The display position of the common effect material may also be a preset loading position. For example, it is pre-set that the common effect material is displayed before the target sub-screen model, then the electronic device directly displays the common effect material before the target sub-screen model after detecting the first material loading operation. If there are multiple common effect materials, the display order of the common effect materials can be adjusted and determined by the user.

It should be noted that after the electronic device loads the common effect material, it can also establish an association relationship among the common effect material, the split-screen model, and the target sub-screen model. For example, the electronic device may continue to improve the above-established association relationship between the split-screen model and the target sub-screen model, that is, add the common effect material to the association relationship. For example, the common effect material is added to the association relationship as a child node of the split-screen model. The position of the common effect material in the association relationship can be determined by its display position in the material operation area.

Referring to FIG. 2, the common effect materials corresponding to the first material loading operation include "eye makeup", "cosmetic contact lenses", "eyelash" and "filter", and then such common effect materials can be displayed at the subordinate display level of the "split-screen model". And, in response to the first material loading operation, the electronic device can display "eye makeup" before the "upper sub-screen model" and "lower sub-screen model", and display "cosmetic contact lenses", "eyelashes" and "filter" after the "upper sub-screen model" and "lower sub-screen model".

In FIG. 2, for each effect material, a corresponding check box is also set so that the user can continue to perform secondary operations on the effect material after the first material loading operation. For example, in the first material loading operation, the user loads 4 common effect materials including "eye makeup", "cosmetic contact lenses", "eyelash" and "filter". Afterwards, the user can remove certain common effect materials by checking or unchecking their corresponding check boxes. For example, if the user unchecks the "eyelashes" effect material, then the split-screen effect will not include "eyelashes".

It should be noted that the electronic device may provide a parameter setting function for a common effect material. Users can perform trigger operations such as single-click, double-click, etc. on the common effect material. After the electronic device detects the trigger operation, it displays parameter setting items corresponding to the triggered common effect material in the parameter setting area 230 shown in FIG. 2. After that, the user can perform parameter setting operations such as selecting, deleting, changing parameter values, or the like for the parameter setting items. **In** response to the parameter setting operation, the electronic device can implement the parameter setting of the triggered common effect material, and update the triggered common effect material according to the set parameter values.

S140. generate a split-screen effect based on the split-screen model, the common effect material and the target sub-screen model.

Specifically, after the above-mentioned steps, the electronic device can obtain the split-screen model, the common effect material and the target sub-screen model that have an association relationship, and the split-screen model, the common effect material and the target sub-screen model each has its corresponding parameter information. Since the split-screen effect need to be rendered and then displayed, after the electronic device obtains the above information, it needs to construct a rendering link corresponding to the split-screen model, the common effect material, and the target sub-screen model according to the association relationship, so as to perform a rendering control for the subsequent generated split-screen effects. Afterwards, the electronic device can combine the common effect material and the target sub-screen model according to the split-screen model to obtain the split-screen effect.

In some embodiments, the split-screen effect generation method further includes: determining component types and component amount of rendering camera components in the split-screen model, based on a second material type and material amount of the common effect materials, to update the split-screen model.

Wherein, the second material type is a type of material classified from a two-dimensional or a three-dimensional perspective, for example, it may be a two-dimensional material type or a three-dimensional material type.

Specifically, according to the above description, the common effect material is loaded at the subordinate display level of the split-screen model, and the information carried in the split-screen model by default is a script component that controls the split-screen model, and there is no camera component, so the common effect material cannot be rendered and displayed. Therefore, after loading the common effect material, the electronic device mounts a corresponding camera component for each common effect material.

During specific implementation, for a certain common effect material, the electronic device determines the second material type of the common effect material according to a material type identifier carried by the common effect material. Then, according to the second material type, the electronic device can determine the component type of its corresponding rendering camera component. For example, if the second material type is a two-dimensional material type, then the component type is an orthographic camera; if the second material type is a three-dimensional material type, then the component type is a perspective camera. Afterwards, the electronic device mounts a rendering camera component of the component type for the common effect material.

According to the above process, for each common effect material, the electronic device can mount a rendering camera component of a corresponding component type. In this way, the material amount of the common effect materials of the second material type is consistent with the component amount of the rendering camera component of a component type corresponding to the second material type. The split-screen model can be updated by merging the above mounted rendering camera components into the split-screen model. In this way, in the process of producing and applying a split-screen effect, each common effect material can be rendered and the effect rendering effect can be displayed, which can realize the same rendering and display effects as that achieved by respectively arranging effect materials under respective target sub-screen models in related technologies.

In some embodiments, after S140, the split-screen effect generation method may further include: exporting the split-screen effect to perform split-screen effect configuration for originally shot data.

Specifically, after having produced the split-screen effect, the user may use the export function of an effect provided by the electronic device to export the produced split-screen effect as an effect product. In this way, during a user makes effect shooting or/effect synthesis, the user can select the effect product to perform split-screen effect configuration on the image/video.

In the above split-screen effect generation method provided by embodiments of the present disclosure, during the production process of the split-screen effect, determining a target sub-screen model by means of a triggering operation on a sub-screen contained in the split-screen model displayed in the material operation area of the effect production interface, and displaying the target sub-screen model in the subordinate display level of the split-screen model, which can realize efficient and quick creation of each sub-screen in the split-screen model, and improve the production efficiency of the split-screen effect to a certain extent; by, in response to the first material loading operation, loading the common effect material into the material operation area, and displaying it at the subordinate display level of the split-screen model, the common effect material and the target sub-screen model are at the same display level in the material operation area, realizing loading the common effect material shared by respective sub-screens under the split-screen model instead of under respective target sub-screen model, so that the common effect material only needs to be added and set once, which can alleviate a problem that repeatedly adding and setting common effect materials in each sub-screen multiple times cause the production process of split-screen effect to be complicated and difficult, can improve the production efficiency of split-screen effects, and can also reduce the amount of effect materials in the split-screen effect and the subsequent rendering process, thereby reducing the consumption of device resources by the split-screen effect during production and usage, and improving the running smoothness and device performance of the split-screen effect.

In some embodiments, after S120, the split-screen effect generation method further includes: in response to a second material loading operation, loading a proprietary effect material into the material operation area and displaying it at a subordinate display level of the target sub-screen model.

Wherein, the second material loading operation is an interactive operation of importing a proprietary effect material to the subordinate display level of the target sub-screen model in the material operation area. The proprietary effect material refers to an effect material exclusive to a target sub-screen model, which only acts on the target sub-screen model.

Specifically, after the electronic device displays the target sub-screen model, the user can load an effect material with respect to the target sub-screen model, that is, the user can perform a second material loading operation in the material operation area. After the electronic device detects the second material loading operation, the electronic device loads the effect material operated by the operation under the target sub-screen model, and determines it as the proprietary effect material of the target sub-screen model, and displays it on the subordinate display level of the target sub-screen model. In this way, the loading of the proprietary effect material corresponding to the target sub-screen model can be realized, and the effects in the split-screen effect can be enriched.

In an example, the second material loading operation may be to select at least one effect material from imported effect materials, and load it to the target sub-screen model. For example, from the "resource management" sub-area shown in FIG. 2, the user can directly load the "face generation" effect material under the "lower sub-screen model" in the "effect material" sub-area, by dragging the "face generation" effect material, or selecting the "lower sub-screen model" and then double-clicking the "face generation" effect material. The "face generation" effect material here is an effect material that superimposes a certain image style on the human face, which can be realized through a stylized model such as a Gan model or the like.

In another example, the second material loading operation may be to directly load the "2D drawing board" effect material and its subordinate "face sticker" effect material under the "upper sub-screen model" in the material operation area, through a relevant function control set in the "effect material" sub-area.

It should be noted that, after loading the proprietary effect material, the electronic device can also establish an association relationship between the proprietary effect material and the target sub-screen model. For example, the electronic device may continue to improve the association relationship among the split-screen model, the public material model and the target sub-screen model as established above, that is, add the proprietary effect material to a corresponding target sub-screen model in the relationship. For example, the proprietary effect material is added to the association relationship as a child node of the target sub-screen model.

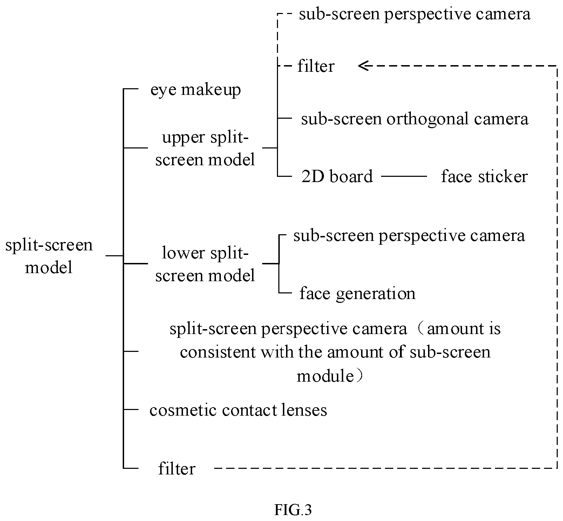

Through the operations of the above-mentioned embodiments, the association relationship between the effect materials in the split-screen effect as shown in FIG. 3 can be obtained. In the relationship, the "split-screen model" is at the highest display level, and the "eye makeup" effect material, "upper sub-screen model", "lower sub-screen model", "cosmetic contact lenses" effect material and "filter" effect material are all at the middle display level, the "2D drawing board-face sticker" effect material and the "face generation" effect material are at the lowest display level. The effect materials in the association relationship in FIG. 3 are at display levels and display positions which are consistent with the display levels and display positions of the effect materials displayed in the material operation area 210 in FIG. 2.

Correspondingly, S140 can be implemented as: generating the split-screen effect based on the split-screen model, common effect material, target sub-screen model and proprietary effect material. That is, the electronic device can generate the split-screen effect based on the split-screen model and its subordinate common effect materials, the target sub-screen model and its subordinate proprietary effect materials, parameter values of each model, parameter values of each effect material, and the above-mentioned associations, to enrich the effects of the split-screen effects.

In some embodiments, the process of rendering and displaying each effect material may be implemented as follows: rendering the common effect material and the proprietary effect material respectively based on a first material information about the common effect material and a second material information about the proprietary effect material, to generate a target rendering result; and displaying the target rendering result in an effect presentation area in the effect production interface.

Wherein, the material information may comprise a first material type and a material arrangement position, or the material arrangement position. The first material type is a material type classified in terms of material rendering effect, for example, it may be a material type for which a rendering order is defined and a material type for which a rendering order is not defined. The material arrangement position may refer to the display position of the arrangement sequence of each effect material in the material operation area. For example, in FIG. 2, the material arrangement positions of the "eye makeup" effect material, "2D drawing board-face sticker", "face generation" effect material, "cosmetic contact lenses" effect material and "filter" effect material are1, 2, 3, 4 and 5 respectively. The target rendering result is the result obtained by rendering each effect material. The effect presentation area is used to display the combined effect of various imported effect materials, so that the user can more intuitively view the rendering effect of each target sub-screen and the overall rendering effect of the split-screen effect.

Specifically, in order to allow users to view the production effect of split-screen effect more intuitively, and adjust effect materials more intuitively and efficiently, in the embodiments of the present disclosure, an effect presentation area can be set in the effect production interface to present the effect rendering result of a single sub-screen and/or the effect rendering result of the entire split screen. On this basis, the electronic device can respectively determine a rendering sequence (i.e., a rendering link) of rendering the common effect materials and rendering the proprietary effect materials according to the first material information about the common effect materials and the second material information about the proprietary effect materials. Then, the electronic device executes the rendering operation on the common effect material and the proprietary effect material according to the rendering link, generates a target rendering result, and displays the target rendering result in the effect proprietary area of the effect production interface.

In an example, the above-mentioned generation of the target rendering result may be implemented as follows: according to the material arrangement position in the first material information and the material arrangement position in the second material information, determining a first rendering order for the common effect material and a second rendering order for the proprietary effect material, and generating a rendering link based on the first rendering order and the second rendering order; and rendering the common effect material and the proprietary effect material respectively based on the rendering link, to generate the target rendering result.

Specifically, in this example, the rendering link is consistent with the material arrangement positions of effect materials (including common effect material and proprietary effect material) in the above-mentioned association relationship, that is, the rendering can be performed according to the sequence of the effect materials displayed in the material operation area. Therefore, the electronic device determines first rendering orders for the common effect materials based on the material arrangement positions in the first material information about the common effect materials, and determines second rendering orders for the proprietary effect materials based on the material arrangement positions in the second material information about the proprietary effect materials. Because there may be cross-arrangement between common effect materials and proprietary effect materials, there may also be crossing between the first rendering orders and the second rendering orders, that is, the first rendering orders and the second rendering orders may not be continuous. For example, for the association relationship shown in FIG. 3, it can be determined that the first rendering orders corresponding to the common effect materials "eye makeup", "cosmetic contact lenses" and "filter" is 1, 4 and 5 respectively, and the second rendering orders corresponding to the proprietary effect materials "human face texture" and "face generation" are 2 and 3 respectively.

Then, the electronic device merges the first rendering orders and the second rendering orders to obtain a complete rendering sequence, that is, to obtain a rendering link. Afterwards, the electronic device can refer to the rendering link, invoke a related rendering program, for rendering the common effect materials and the proprietary effect materials respectively to obtain a target rendering result. The target rendering result obtained in this way can reflect the arrangement of respective materials in the material operation area, thereby providing the user with a more intuitive adjustment basis for effect materials, and further improving the efficiency of subsequent user adjustments to effect materials.

For example, the electronic device first performs eye makeup rendering on a basic human face image corresponding to the effect displayed in the effect presentation area 220 in FIG.2, to generate a first human face image. Then, the electronic device performs face mapping and face generation (taking the face generation in the deep-featured style in FIG. 2 as an example) rendering on the first face image, and generates a second face image corresponding to the upper sub-screen model and a third face image corresponding to the lower sub-screen model. Afterwards, the electronic device performs cosmetic contact lenses rendering and filter rendering on the second face image and the third face image respectively, obtains a fourth face image and a fifth face image, and then displays the fourth face image and the fifth face image in the effect presentation area 220 as an object rendering result. In this example, the electronic device performs a total of 7 rendering operations.

In another example, when it is determined that the first material type of the proprietary effect material matches a preset material type, the above-described generating a target rendering result can be implemented as: determining a third rendering order for the proprietary effect material based on the material arrangement position in the second material information, and determining a fourth rendering order for the common effect material based on the material arrangement position in the first material information; generating a rendering link based on the third rendering order and the fourth rendering order; and rendering the common effect material and the proprietary effect material respectively based on the rendering link, to generate the target rendering result.

Wherein, the preset material type refers to a material type preset in advance, that is a material type for which a rendering order is defined, for example, it can be a material type of a human face generation effect material, etc. which needs to be rendered before rendering other effect materials.

Specifically, in this example, the electronic device will first match the first material types of the proprietary effect materials with the preset material type, so as to judge whether there exists a effect material of the preset material type among the proprietary effect materials. If the matching result is that at least one first material type matches successfully, which means that there is an effect material among the proprietary effect materials that needs to be rendered preferentially, in this case, in order to ensure the fidelity of subsequent effect rendering effects, in the embodiments of the present disclosure, the rendering order of the proprietary effect material will be arranged before the rendering order of the common effect material. At this time, the electronic device first determines the third rendering order of the proprietary effect material according to the material arrangement position in the second material information about the proprietary effect materials, and then determines the fourth rendering order of the common effect material according to the material arrangement position in the first material information about the common effect material. According to the foregoing description, the third rendering order shall have priority over the fourth rendering order. Then, the electronic device merges the third rendering order and the fourth rendering order to obtain a complete rendering sequence, that is, to obtain a rendering link.

For example, for the association relationship shown in FIG. 3, the material arrangement positions of the proprietary effect materials "face texture" and "face generation" are 2 and 3 respectively, and the material arrangement positions of the common effect materials "eye makeup", "cosmetic contact lenses" and "filter" are 1, 4 and 5 respectively, then according to the above process, it can be determined that the third rendering orders corresponding to "face texture" and "face generation" are 1 and 2 respectively, the fourth rendering orders corresponding to "eye makeup", "cosmetic contact lenses" and "filter" are 3, 4, and 5, respectively. The third rendering orders 1 and 2 here can be executed sequentially or in parallel.

If there is a proprietary effect material matching the preset material type under a target sub-screen model, and the number of proprietary effect materials under the target sub-screen model is multiple, then in a third rendering sequence corresponding to the target sub-screen model, the rendering orders of the proprietary effect materials corresponding to the preset material type occupy first place, and the rendering orders of other proprietary effect materials corresponding to the target sub-screen model can be determined according to the arrangement positions of the materials.

If there are multiple target sub-screen models, because such multiple target sub-screen models are independent from each other, then for each target sub-screen model, a third rendering sequence can be determined, and then connected to a subsequent fourth rendering sequence, so a rendering link can be generated for each target sub-screen model.

Afterwards, the electronic device refers to the rendering link, invokes a related rendering program, and renders the common effect materials and the proprietary effect materials respectively to obtain a target rendering result. The target rendering result obtained in this way has a more realistic effect, and does not require users to manually adjust the arrangement order of effect materials, further improving the effect production efficiency.

For example, if the preset material type is a material type of a face generation, then the electronic device may judge that there is an effect material of the preset material type in the lower sub-screen model shown in FIG. 2. At this time, according to the rendering link, the electronic device can first perform the rendering of face mapping and face generation on the basic face image, to generate the sixth face image corresponding to the upper sub-screen model and the seventh face image corresponding to the lower sub-screen model image. Afterwards, the electronic device can perform the effect rendering of eye makeup, cosmetic contact lenses and filter on the sixth face image and the seventh face image respectively, to generate corresponding eighth face image and ninth face image, and display the eighth face image and the ninth face image in the effect presentation area 220 as target rendering results. In this example, the electronic device performs a total of 8 rendering operations.

In yet another example, when it is determined that the first material type of the proprietary effect material does not match a preset material type, the above-described generating a target rendering result can be implemented as: determining a fifth rendering order for the common effect material based on the material arrangement position in the first material information, and determining a sixth rendering order for the proprietary effect material based on the material arrangement position in the second material information; wherein the fifth rendering order takes precedence over the sixth rendering order; generating a rendering link based on the fifth rendering order and the sixth rendering order; rendering the common effect material and the proprietary effect material respectively based on the rendering link, to generate the target rendering result.

Specifically, according to the above description, if the result of matching the proprietary effect materials by the electronic device is that none of the proprietary effect materials successfully matches the preset material type, it means that there is no effect material in the proprietary effect materials that needs to be rendered preferentially. At this time, the electronic device may arrange the rendering order of the common effect material before the rendering order of the proprietary effect material. Because the basic image can be rendered first by using the common effect material to obtain an intermediate image, and then the subsequent rendering for each target sub-screen can be rendered based on the intermediate image, the rendering of the common effect material only needs to be executed once, which reduces the number of renderings, saves device resources, and improves device performance.

During a specific implementation, the electronic device first determines a fifth rendering order for the common effect material based on the material arrangement position in the first material information about the common effect material, and determines a sixth rendering order for the proprietary effect material based on the material arrangement position in the second material information about the proprietary effect material. According to the above description, the fifth rendering order takes precedence over the sixth rendering order. Then, the electronic device merges the fifth rendering order and the sixth rendering order to obtain a complete rendering sequence, that is, to obtain a rendering link.

For example, for the association relationship shown in FIG. 3, the material arrangement positions of the proprietary effect materials "face texture" and "face generation" are 2 and 3 respectively, and the material arrangement positions of the common effect materials "eye makeup", "cosmetic contact lenses" and " filter" are 1, 4 and 5 respectively, then according to the above process, it can be determined that the fifth rendering orders corresponding to the common effect materials "eye makeup", "cosmetic contact lenses" and " filter" is 1, 2 and 3 respectively, the sixth rendering orders corresponding to the proprietary effect materials "face texture" and "face generation" is 4 and 5 respectively. Here, the sixth rendering orders 4 and 5 can be executed sequentially or in parallel.

If there are multiple target sub-screen models, because such multiple target sub-screen models are independent from each other, then for each target sub-screen model, a sixth rendering sequence can be determined, and then connected to a subsequent fifth rendering sequence, so a rendering link can be generated for each target sub-screen model.

Afterwards, the electronic device refers to the rendering link, invokes a related rendering program, and renders the common effect materials and the proprietary effect materials respectively to obtain a target rendering result. Therefore, the rendering operations can be reduced, the rendering efficiency can be improved, the device performance can be saved, without requiring users to manually adjust the arrangement order of effect materials, and the effect production efficiency can be further improved.

For example, assuming that the effect material of "face generation" in the lower sub-screen model shown in FIG. 2 is an effect material of "lip makeup", then none of the proprietary effect materials match the preset material type. At this time, according to the rendering link, the electronic device first performs the effect renderings of eye makeup, cosmetic contact lens, and filter on the basic face image, to generate a tenth face image. Afterwards, the electronic device performs the face texture and lip rendering on the tenth face image respectively, generates an eleventh face image corresponding to the upper sub-screen model and a twelfth human face image corresponding to the lower sub-screen model, and displays the eleventh human face image and the twelfth human face image in the effect presentation area 220 as target rendering results. In this example, the electronic device performs a total of 5 rendering operations.

In some embodiments, before S140, the split-screen effect generation method may further include: in response to a material moving operation, moving a target effect material to a target position corresponding to the material moving operation, and determining target material information corresponding to the moved target effect material based on the target position.

Wherein, the material moving operation refers to a kind of transformation operation of material display position performed on an effect material loaded in the material operation area, for example, it may be an operation of dragging or clicking and moving an effect material from one display position to another display position. The target effect material is the common effect material or the exclusive effect material. The target position is a material position subordinate to the split-screen model or a material position subordinate to the target sub-screen model.

Specifically, according to the above description, after a user loads common effect materials and proprietary effect materials for the first time, the user may be dissatisfied with the split-screen effects displayed in the effect presentation area. At this time, the user can continue to load a new effect material or delete a loaded effects material, to enrich or simplify effects. In addition, the user can also adjust the effects by moving a loaded target effect material. At this time, the electronic device can detect the material movement operation performed by the user. Then, according to the operation object (target effect material) and the operation track (from an initial position to a target position) of the material movement operation, the electronic device can delete the target effect material from the initial position and displays it at the target position. Afterwards, in order to still perform normal rendering and displaying subsequently, the electronic device may re-determine the material information of the target effect material according to the target position, and determine the re-determined material information as the target material information. In the subsequent process, the electronic device may update the association relationship and the rendering link shown in FIG. 3 according to the target material information, and then re-render and display each effect material.

The above configuration can automatically modify the target material information corresponding to the target effect material according to the movement of the effect material, so as to automatically update the rendering link required for re-rendering, which can eliminate the need for the user to memorize the display level of each effect material and manually modify the display levels of the target effect material and other effect materials affected by its moving operation in related technologies, can not only reduce the steps for users to produce the effect, further improve the production efficiency of split-screen effect, but also reduce the production difficulty of split-screen effect, so as to further improve the production efficiency of split-screen effect.

In some embodiments, the above-described process of the electronic device modifying the association relationship and the rendering link in respondence to the material movement operation may be specifically implemented: establishing an association relationship between the moved target effect material and a target model corresponding to the target position; determining a target display level corresponding to the moved target effect material based on the display level corresponding to the target model; determining the moved target effect material to be the common effect material or the proprietary effect material based on the target display level, and determining a target material arrangement position corresponding to the moved target effect material based on the target position.

Wherein, the target model is a split-screen model or a target sub-screen model.

Specifically, the electronic device first modifies the association relationship of the target effect material according to the target model corresponding to the target position. For example, move the common effect material "filter" in FIG. 2 to the top of "face sticker" of the "upper sub-screen model". Then, the electronic device may modify the association relationship of the "filter" in FIG. 3 from a child node of the "split-screen model" to a child node of the "upper-sub-screen model" which is a child node of the "split-screen model". Meanwhile, in order to ensure subsequent rendering and display, the "upper sub-screen model" can add a camera component of the "sub-screen perspective camera".

Then, according to the above description, the rendering link is related to whether the target effect material is a common effect material or a proprietary effect material, as well as the material arrangement position where the target effect material is located. Therefore, after modifying the association relationship of the target effect material, the electronic device can determine the target display level of the moved target effect material according to the display level where the target model is located. That is, the electronic device determines the subordinate display level next of the display level corresponding to the target model as the modified display level of the moved target effect material, that is, the target display level. For example, the target display level of the above-mentioned "filter" effect material is the lowest display level. Afterwards, the electronic device can identify, according to the target display level, that the moved target effect material belongs to a common effect material or a proprietary effect material. In addition, the electronic device can determine the target position as the target material arrangement position corresponding to the moved target effect material. For example, if the target position of the above-mentioned "filter" effect material is the first position under the "upper sub-screen model", then it can be determined that its target material arrangement position is 2. Correspondingly, it is necessary to adaptively modify the material arrangement positions of other unmoved effect materials.

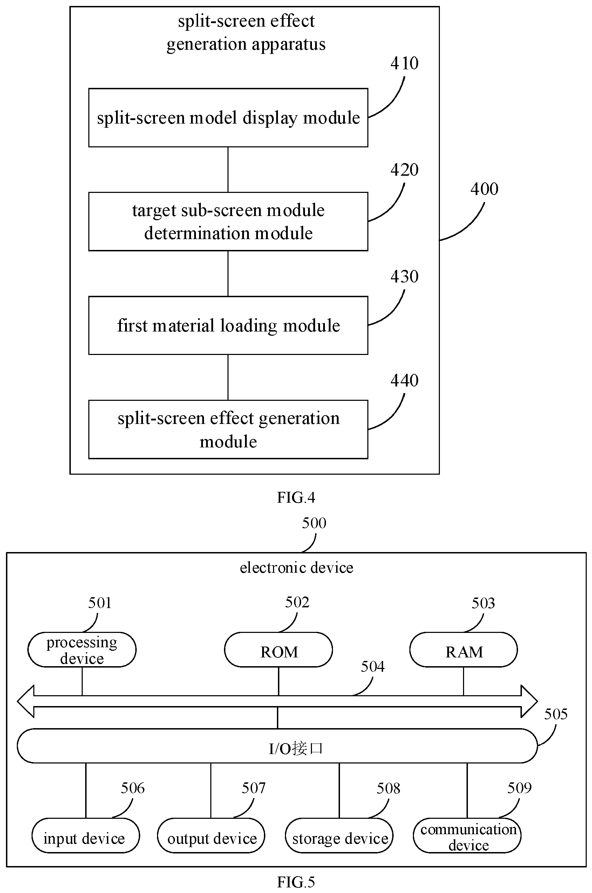

FIG. 4 shows a schematic structural diagram of a split-screen effect generation apparatus provided by an embodiment of the present disclosure. As shown in FIG. 4, the apparatus 400 for generating a split-screen effect may include:
a split-screen display module 410 configured to display a split-screen model in a material operation area in an effect production interface;
a target sub-screen model determination module 420 configured to, in response to a triggering operation on a sub-screen included in the split-screen model, determine a target sub-screen model, and display the target sub-screen model at a subordinate display level of the split-screen model;
a first material loading module 430 configured to, in response to a first material loading operation, load a common effect material into the material operation area and display it at the subordinate display level of the split-screen model; wherein the common effect material and the target sub-screen model are at the same display level in the material operation area;
a split-screen effect generation module 440 configured to generate the split-screen effect based on the split-screen model, the common effect material and the target sub-screen model.

In the above split-screen effect generation apparatus provided by embodiments of the present disclosure, during the production process of the split-screen effect, determining a target sub-screen model by means of a triggering operation on a sub-screen contained in the split-screen model displayed in the material operation area of the effect production interface, and displaying the target sub-screen model at the subordinate display level of the split-screen model, which can realize efficient and quick creation of each sub-screen in the split-screen model, and improve the production efficiency of the split-screen effect to a certain extent; by, in response to the first material loading operation, loading the common effect material into the material operation area, and displaying it at the subordinate display level of the split-screen model, the common effect material and the target sub-screen model are at the same display level in the material operation area, realizing loading the common effect material shared by respective sub-screens under the split-screen model instead of under respective target sub-screen model, so that the common effect material only needs to be added and set once, which can alleviate a problem that repeatedly adding and setting common effect materials in each sub-screen multiple times causes the production process of split-screen effect to be complicated and difficult, can improve the production efficiency of split-screen effects, and can also reduce the amount of effect materials in the split-screen effect and the subsequent rendering process, thereby reducing the consumption of device resources by the split-screen effect during production and usage, and improving the running smoothness and device performance of the split-screen effect.

In some embodiments, the apparatus 400 for generating a split-screen effect may also include a second material loading module, configured to:
after in response to a triggering operation on a sub-screen included in the split-screen model, determining a target sub-screen model, and displaying the target sub-screen model at a subordinate display level of the split-screen model, in response to a second material loading operation, load a proprietary effect material into the material operation area and display it at a subordinate display level of the target sub-screen model; and
correspondingly, the split-screen effect generation module 440 is specifically configured to:
   generate the split-screen effect based on the split-screen model, the common effect material, the target sub-screen model, and the proprietary effect material.

In some embodiments, the apparatus 400 for generating a split-screen effect may also include a rendering module that includes:
a target rendering result generation sub-module configured to render the common effect material and the proprietary effect material respectively based on a first material information about the common effect material and a second material information about the proprietary effect material, to generate a target rendering result; wherein the material information comprises a first material type and a material arrangement position, or the material arrangement position; and
a rendering result display sub-module configured to display the target rendering result in an effect presentation area in the effect production interface.

**In** one example, the target rendering result generation sub-module may be specifically configured to:
according to the material arrangement position in the first material information and the material arrangement position in the second material information, determine a first rendering order for the common effect material and a second rendering order for the proprietary effect material, and generate a rendering link based on the first rendering order and the second rendering order; wherein the rendering link is used to record rendering orders of the effect materials; and
render the common effect material and the proprietary effect material respectively based on the rendering link, to generate the target rendering result.

In another example, the target rendering result generation sub-module may be specifically configured to:
in a case it is determined that the first material type of the proprietary effect material matches a preset material type, determine a third rendering order for the proprietary effect material based on the material arrangement position in the second material information, and determine a fourth rendering order for the common effect material based on the material arrangement position in the first material information; wherein the third rendering order takes precedence over the fourth rendering order;
generate a rendering link based on the third rendering order and the fourth rendering order;
render the common effect material and the proprietary effect material respectively based on the rendering link, to generate the target rendering result.

In yet another example, the target rendering result generation sub-module may be specifically configured to:
when it is determined that the first material type of the proprietary effect material does not match a preset material type, determine a fifth rendering order for the common effect material based on the material arrangement position in the first material information, and determine a sixth rendering order for the proprietary effect material based on the material arrangement position in the second material information; wherein the fifth rendering order takes precedence over the sixth rendering order;
generate a rendering link based on the fifth rendering order and the sixth rendering order;
render the common effect material and the proprietary effect material respectively based on the rendering link, to generate the target rendering result.

In some embodiments, the apparatus 400 for generating a split-screen effect may also include a material movement module configured to:
before generating the split-screen effect based on the split-screen model, the common effect material and the target sub-screen model, in response to a material moving operation, move a target effect material to a target position corresponding to the material moving operation, and determine target material information corresponding to the moved target effect material based on the target position;
wherein, the target effect material is the common effect material or the exclusive effect material, and the target position is a material position subordinate to the split-screen model or a material position subordinate to the target sub-screen model.

Furthermore, the material movement module may be specifically configured to:
establish an association relationship between the moved target effect material and a target model corresponding to the target position; wherein the target model is the split-screen model or the target sub-screen model;
determine a target display level corresponding to the moved target effect material based on the display level corresponding to the target model;
determine the moved target effect material to be the common effect material or the proprietary effect material based on the target display level, and determine a target material arrangement position corresponding to the moved target effect material based on the target position.

In some embodiments, the apparatus 400 for generating a split-screen effect may also include a split-screen updating module configured to:
before generating the split-screen effect based on the split-screen model, the common effect material and the target sub-screen model, determine component types and component amount of rendering camera components in the split-screen model, based on a second material type and material amount of the common effect material, to update the split-screen model.

In some embodiments, the apparatus 400 for generating a split-screen effect may also include a target sub-screen model updating module configured to:
after in response to a triggering operation on a sub-screen included in the split-screen model, determining a target sub-screen model, and displaying the target sub-screen model at a subordinate display level of the split-screen model, in response to a triggering operation on the target sub-screen model, display a parameter setting area corresponding to the target sub-screen model in the effect production interface;
in response to a parameter setting operation on a target parameter displayed in the parameter setting area, determine a target parameter value, and update the target sub-screen model based on the target parameter value.

It should be noted that the apparatus 400 for generating a split-screen effects shown in FIG. 4 can execute each step in the split-screen effect generation method described in any embodiment of the present disclosure, and realize various processes and effects in the split-screen effect generation method described in any embodiment above, which will not be described in detail here.

An embodiment of the present disclosure also provides an electronic device, which may include a processor and a memory, and the memory may be used to store executable instructions. Wherein, the processor can be used to read executable instructions from the memory, and execute the executable instructions to implement the split-screen effect generation method in the above embodiments.

FIG. 5 illustrates a schematic structural diagram of an electronic device provided by embodiments of the present disclosure. It shall be noted that the electronic device shown in Fig. 5 is only an example, and should not impose any restriction on the functions and application scopes of the embodiments of the present disclosure.

As shown in Fig. 5, the electronic device 500 can include a processing apparatus (such as a central processing unit, a graphics processor, etc.) 501, which can perform various appropriate actions and processes according to a program stored in a Read Only Memory (ROM) 502 or a program loaded into a Random Access Memory (RAM) 503 from a storage device 508. In the RAM 503, various programs and data required for the operation of the electronic device 500 are also stored. The processing device 301, ROM 502 and RAM 503 are connected to each other through a bus 504. An input/output (I/O) interface 505 is also connected to the bus 504.

Generally, the following devices can be connected to the I/O interface 505: an input device 506 including, for example, touch screen, touch pad, keyboard, mouse, camera, microphone, accelerometer, gyroscope, etc.; an output device 507 such as Liquid Crystal Display (LCD), speakers, vibrators, etc.; a storage device 508 including a magnetic tape, a hard disk, etc.; and a communication device 509. The communication device 509 may allow the electronic device 500 to communicate with other devices wirelessly or in wired so as to exchange data. Although an electronic device 500 with various apparatuses is shown, it should be understood that it is not required to implement or have all the devices shown. More or fewer devices may alternatively be implemented or provided.

An embodiment of the present disclosure also provides a computer-readable storage medium that stores a computer program, and the computer program, when executed by a processor, causes the processor to implement the method of generating split-screen effects in any embodiment of the present disclosure.

Particularly, according to embodiments of the present disclosure, the process described above with reference to the flowchart can be implemented as a computer software program. For example, an embodiment of the present disclosure includes a computer program product including a computer program carried on a computer readable medium, the computer program containing program code for executing the method shown in the flowchart. In such an embodiment, the computer program can be downloaded and installed from the network through the communication device 509, or installed from the storage device 308 or from the ROM 502. When executed by the processing device 501, the computer program carries out the above-mentioned functions defined in the method of the embodiment of the present disclosure.

It should be noted that the above-mentioned computer-readable medium in this disclosure can be a computer-readable signal medium or a computer-readable storage medium or any combination of the two. The computer-readable storage medium can be, for example, but not limited to, an electrical, magnetic, optical, electromagnetic, infrared, or semiconductor system, device or equipment, or any combination of the above. More specific examples of computer-readable storage media may include, but not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium can be any tangible medium that contains or stores a program that can be used by or in combination with an instruction execution system, device, or equipment. In this disclosure, the computer-readable signal medium may include a data signal propagated in baseband or as a part of a carrier wave, in which computer-readable program code is carried. This propagated data signal can take many forms, including, but not limited to, electromagnetic signals, optical signals, or any suitable combination of the above. The computer-readable signal medium can also be any computer-readable medium other than the computer-readable storage medium, which can send, propagate, or transmit the program for use by or in connection with the instruction execution system, apparatus, or device. The program code contained in the computer-readable medium can be transmitted by any suitable medium, including but not limited to: electric wire, optical cable, RF (radio frequency), etc., or any suitable combination of the above.

In some embodiments, the client and the server can communicate by using any currently known or future developed network protocol such as HTTP (HyperText Transfer Protocol), and can be interconnected with any form or medium of digital data communication (e.g., communication network). Examples of communication networks include a local area network ("LAN"), a wide area network ("WAN"), an internet network (e.g., the Internet) and end-to-end network (e.g., ad hoc end-to-end network), as well as any currently known or future developed networks.

The above-mentioned computer-readable medium may be included in the electronic device; or it can exist alone without being loaded into the electronic device.

The above-mentioned computer-readable medium carries one or more programs, which, when executed by the electronic device, cause the electronic device to execute the method of generating split-screen effects as described in any embodiment of the present disclosure.

Computer program codes for performing the operations of the present disclosure can be written in one or more programming languages or a combination thereof, including object-oriented programming languages such as Java, Smalltalk, and C++, as well as conventional procedural programming languages such as "C" language or similar programming languages. The program codes can be completely executed on the user's computer, partially executed on the user's computer, executed as an independent software package, partially executed on the user's computer, and partially executed on the remote computer, or completely executed on the remote computer or server. **In a** case related to remote computers, the remote computers can be connected to the user computers through any kind of networks, including Local Area Network (LAN) or Wide Area Network (WAN), or can be connected to external computers (for example, through the Internet with Internet service providers).

The flowcharts and block diagrams in the drawings illustrate the architecture, functions, and operations of possible embodiments of systems, methods, and computer program products according to various embodiments of the present disclosure. **In** this regard, each block in the flowchart or block diagram may represent a module, a program segment, or a part of the code, which contains one or more executable instructions for implementing specified logical functions. It should also be noted that in some alternative implementations, the functions labeled in the blocks may also occur in a different order than those labeled in the drawings. For example, two blocks shown in succession can actually be executed substantially in parallel, and sometimes they can be executed in the reverse order, depending on the functions involved. It should also be noted that each block in the block diagram and/or flowchart, and the combination of blocks in the block diagram and/or flowchart, can be realized by a dedicated hardware-based system that performs specified functions or operations, or can be implemented by a combination of dedicated hardware and computer instructions.

The units described in the embodiments of this disclosure can be realized by software or hardware. In some cases, the name of the unit does not limit the module itself.

The functions described above herein can be at least partially performed by one or more hardware logic components. For example, without limitation, exemplary types of hardware logic components that can be used may include: field programmable gate array (FPGA), application specific integrated circuit (ASIC), application specific standard product (ASSP), system on chip (SOC), complex programmable logic device (CPLD) and so on.

In the context of the present disclosure, a machine-readable medium can be a tangible medium that can contain or store a program for use by or in connection with an instruction execution system, apparatus, or device. The machine-readable medium can be a machine-readable signal medium or a machine-readable storage medium. The machine-readable medium may include, but not limited to, electronic, magnetic, optical, electromagnetic, infrared, or semiconductor systems, devices or equipment, or any suitable combination of the foregoing. More specific examples of machine-readable storage medium may include electrical connections based on one or more wires, portable computer disks, hard disks, random access memories (RAM), read-only memories (ROM), erasable programmable read-only memories (EPROM or flash memories), optical fibers, compact disk read-only memories (CD-ROMs), optical storage devices, magnetic storage devices, or any suitable combination of the above.

The above description is only a preferred embodiment of the present disclosure and an illustration of the applied technical principles. Those skilled in the art should understand that the scope of the disclosure involved in this disclosure is not limited to the technical solutions formed by the specific combination of the above technical features, but also covers the technical solutions formed by the above technical features or other technical solutions formed by any combination of equivalent features, without departing from the above concept of the present disclosure. For example, a technical solution formed by replacing the above-mentioned features with (but not limited to) technical features with similar functions disclosed in this disclosure.

In addition, while operations are depicted in a particular order, this should not be understood as requiring that the operations be performed in the particular order shown or to be performed in sequential order. Under certain circumstances, multitasking and parallel processing may be advantageous. Likewise, while the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

## Claims

1. A split-screen effect generation method, comprising:
displaying (S110) a split-screen model in a material operation area in an effect production interface, wherein the split-screen model is a preset model that splits a screen into at least two sub-screens;
in response to a triggering operation on a sub-screen included in the split-screen model, determining (S120) a target sub-screen model, and displaying the target sub-screen model at a subordinate display level of the split-screen model, wherein a sub-screen model is a model corresponding to a split sub-screen;
in response to a first material loading operation, loading (S130) a common effect material into the material operation area and displaying it at the subordinate display level of the split-screen model; wherein the common effect material refers to the same effect material that needs to be loaded to be shared by respective target sub-screen models, wherein the common effect material and the target sub-screen model are at the same display level in the material operation area in the split-screen model;
generating (S140) the split-screen effect based on the split-screen model, the common effect material and the target sub-screen model.

2. The method of claim 1, after in response to a triggering operation on a sub-screen included in the split-screen model, determining a target sub-screen model, and displaying the target sub-screen model at a subordinate display level of the split-screen model, the method further comprises:
in response to a second material loading operation, loading a proprietary effect material into the material operation area and displaying it at a subordinate display level of the target sub-screen model; and
the generating the split-screen effect based on the split-screen model, the common effect material and the target sub-screen model, comprises:
generating the split-screen effect based on the split-screen model, the common effect material, the target sub-screen model, and the proprietary effect material.

3. The method of claim 2, wherein, before the generating the split-screen effect based on the split-screen model, the common effect material, the target sub-screen model, and the proprietary effect material, the method further comprises:
rendering the common effect material and the proprietary effect material respectively based on a first material information about the common effect material and a second material information about the proprietary effect material, to generate a target rendering result; wherein the material information comprises a first material type and a material arrangement position, or the material arrangement position;
displaying the target rendering result in an effect presentation area in the effect production interface.

4. The method of claim 3, wherein, the rendering the common effect material and the proprietary effect material respectively based on a first material information about the common effect material and a second material information about the proprietary effect material, to generate a target rendering result, comprises:
according to the material arrangement position in the first material information and the material arrangement position in the second material information, determining a first rendering order for the common effect material and a second rendering order for the proprietary effect material, and generating a rendering link based on the first rendering order and the second rendering order; wherein the rendering link is used to record rendering orders of the effect materials;
rendering the common effect material and the proprietary effect material respectively based on the rendering link, to generate the target rendering result.

5. The method of any one of claims 3 to 4, wherein, when it is determined that the first material type of the proprietary effect material matches a preset material type, the rendering the common effect material and the proprietary effect material respectively based on a first material information about the common effect material and a second material information about the proprietary effect material, to generate a target rendering result, comprises:
determining a third rendering order for the proprietary effect material based on the material arrangement position in the second material information, and determining a fourth rendering order for the common effect material based on the material arrangement position in the first material information; wherein the third rendering order takes precedence over the fourth rendering order;
generating a rendering link based on the third rendering order and the fourth rendering order;
rendering the common effect material and the proprietary effect material respectively based on the rendering link, to generate the target rendering result.

6. The method of any one of claims 3 to 5, wherein, when it is determined that the first material type of the proprietary effect material does not match a preset material type, the rendering the common effect material and the proprietary effect material respectively based on a first material information about the common effect material and a second material information about the proprietary effect material, to generate a target rendering result, comprises:
determining a fifth rendering order for the common effect material based on the material arrangement position in the first material information, and determining a sixth rendering order for the proprietary effect material based on the material arrangement position in the second material information; wherein the fifth rendering order takes precedence over the sixth rendering order;
generating a rendering link based on the fifth rendering order and the sixth rendering order;
rendering the common effect material and the proprietary effect material respectively based on the rendering link, to generate the target rendering result.

7. The method of any one of claims 2 to 6, wherein, before generating the split-screen effect based on the split-screen model, the common effect material and the target sub-screen model, the method further comprises:
in response to a material moving operation, moving a target effect material to a target position corresponding to the material moving operation, and determining target material information corresponding to the moved target effect material based on the target position;
wherein, the target effect material is the common effect material or the exclusive effect material, and the target position is a material position subordinate to the split-screen model or a material position subordinate to the target sub-screen model.

8. The method of claim 7, wherein, the determining target material information corresponding to the moved target effect material based on the target position, comprises:
establishing an association relationship between the moved target effect material and a target model corresponding to the target position; wherein the target model is the split-screen model or the target sub-screen model;
determining a target display level corresponding to the moved target effect material based on the display level corresponding to the target model;
determining the moved target effect material to be the common effect material or the proprietary effect material based on the target display level, and determining a target material arrangement position corresponding to the moved target effect material based on the target position.

9. The method of any one of claims 1 to 8, wherein, before generating the split-screen effect based on the split-screen model, the common effect material and the target sub-screen model, the method further comprises:
determining component types and component amount of rendering camera components in the split-screen model, based on a second material type and material amount of the common effect material, to update the split-screen model.

10. The method of any one of claims 1 to 9, wherein, after in response to a triggering operation on a sub-screen included in the split-screen model, determining a target sub-screen model, and displaying the target sub-screen model at a subordinate display level of the split-screen model, the method further comprises:
in response to a triggering operation on the target sub-screen model, displaying a parameter setting area corresponding to the target sub-screen model in the effect production interface;
in response to a parameter setting operation on a target parameter displayed in the parameter setting area, determining a target parameter value, and updating the target sub-screen model based on the target parameter value.

11. An electronic device (500), comprising:
a processor; and
a memory configured to store executable instructions;
in conjunction with a display;
wherein, the processor is configured to read the executable instructions from the memory and execute the executable instructions to implement the split-screen effect generation method of any one of claims 1-10.

12. A computer-readable storage medium storing a computer program, wherein the computer program, when executed by a processor, causes the processor to implement the split-screen effect generation method of any one of claims 1-10.

13. A computer program product, comprising a computer program, wherein the computer program, when executed by a processor, causes the processor to implement the split-screen effect generation method of any one of claims 1-10.

## Patentansprüche

1. Verfahren zum Erzeugen eines Effekts auf einem geteilten Bildschirm, umfassend:
Anzeigen (S110) eines Bildschirmaufteilungsmodells in einem Materialbearbeitungsbereich einer Effektproduktionsschnittstelle, wobei es sich bei dem Bildschirmaufteilungsmodell um ein voreingestelltes Modell handelt, das einen Bildschirm in mindestens zwei Teilbildschirme aufteilt;
als Reaktion auf einen Auslösungsvorgang auf einem Teilbildschirm, der in dem Bildschirmaufteilungsmodell beinhaltet ist, Bestimmen (S120) eines Ziel-Teilbildschirmmodells und Anzeigen des Ziel-Teilbildschirmmodells auf einer untergeordneten Anzeigeebene des Bildschirmaufteilungsmodells, wobei ein Teilbildschirmmodell ein Modell ist, das einem geteilten Teilbildschirm entspricht;
als Reaktion auf einen ersten Materialladevorgang, Laden (S130) eines gemeinsamen Effektmaterials in den Materialbearbeitungsbereich und Anzeigen desselben auf der untergeordneten Anzeigeebene des geteilten Bildschirmmodells; wobei sich das gemeinsame Effektmaterial auf dasselbe Effektmaterial bezieht, das geladen werden muss, um von den jeweiligen Ziel-Teilbildschirmmodellen gemeinsam genutzt zu werden, wobei sich das gemeinsame Effektmaterial und das Ziel-Teilbildschirmmodell auf der gleichen Anzeigeebene im Materialbearbeitungsbereich im geteilten Bildschirmmodell befinden;
Erzeugen (S140) des Effekts auf einem geteilten Bildschirm basierend auf dem Bildschirmaufteilungsmodell, dem gemeinsamen Effektmaterial und dem Ziel-Teilbildschirmmodell.

2. Verfahren nach Anspruch 1, wobei, nach Bestimmen als Reaktion auf einen Auslösungsvorgang auf einem Teilbildschirm, der in dem Bildschirmaufteilungsmodell beinhaltet ist, eines Ziel-Teilbildschirmmodells und Anzeigen des Ziel-Teilbildschirmmodells auf einer untergeordneten Anzeigeebene des Bildschirmaufteilungsmodells, das Verfahren ferner umfasst:
als Reaktion auf einen zweiten Materialladevorgang, Laden eines proprietären Effektmaterials in den Materialbearbeitungsbereich und Anzeigen desselben auf einer untergeordneten Anzeigeebene des Ziel-Teilbildschirmmodells; und
das Erzeugen des Effekts auf einem geteilten Bildschirm basierend auf dem Bildschirmaufteilungsmodell, dem gemeinsamen Effektmaterial und dem Ziel-Teilbildschirmmodell umfasst:
Erzeugen des Effekts auf einem geteilten Bildschirm basierend auf dem Bildschirmaufteilungsmodell, dem gemeinsamen Effektmaterial, dem Ziel-Teilbildschirmmodell und dem proprietären Effektmaterial.

3. Verfahren nach Anspruch 2, wobei vor dem Erzeugen des Effekts auf einem geteilten Bildschirm basierend auf dem Bildschirmaufteilungsmodell, dem gemeinsamen Effektmaterial, dem Ziel-Teilbildschirmmodell und dem proprietären Effektmaterial das Verfahren ferner Folgendes umfasst:
Rendern des gemeinsamen Effektmaterials und des proprietären Effektmaterials basierend auf einer ersten Materialinformation über das gemeinsame Effektmaterial bzw. einer zweiten Materialinformation über das proprietäre Effektmaterial, um ein Ziel-Rendering-Ergebnis zu erzeugen; wobei die Materialinformation einen ersten Materialtyp und eine Materialanordnungsposition oder die Materialanordnungsposition umfasst;
Anzeigen des Zielrendering-Ergebnisses in einem Effektpräsentationsbereich der Effektproduktionsschnittstelle.

4. Verfahren nach Anspruch 3, wobei das Rendern des gemeinsamen Effektmaterials bzw. des proprietären Effektmaterials basierend auf einer ersten Materialinformation über das gemeinsame Effektmaterial bzw. einer zweiten Materialinformation über das proprietäre Effektmaterial, um ein Zielrendering-Ergebnis zu erzeugen, Folgendes umfasst:
gemäß der Materialanordnungsposition in der ersten Materialinformation und der Materialanordnungsposition in der zweiten Materialinformation, Bestimmen einer ersten Rendering-Reihenfolge für das gemeinsame Effektmaterial und einer zweiten Rendering-Reihenfolge für das proprietäre Effektmaterial und Erzeugen einer Rendering-Verknüpfung basierend auf der ersten Rendering-Reihenfolge und der zweiten Rendering-Reihenfolge; wobei die Rendering-Verknüpfung zum Aufzeichnen von Rendering-Reihenfolgen der Effektmaterialien verwendet wird;
Rendern des gemeinsamen Effektmaterials und des proprietären Effektmaterials jeweils basierend auf der Rendering-Verknüpfung, um das gewünschte Rendering-Ergebnis zu erzeugen.

5. Verfahren nach einem der Ansprüche 3 bis 4, wobei, wenn bestimmt wird, dass der erste Materialtyp des proprietären Effektmaterials mit einem voreingestellten Materialtyp übereinstimmt, das Rendering des gemeinsamen Effektmaterials bzw. des proprietären Effektmaterials jeweils basierend auf einer ersten Materialinformation über das gemeinsame Effektmaterial und einer zweiten Materialinformation über das proprietäre Effektmaterial, um ein Ziel-Rendering-Ergebnis zu erzeugen, umfasst:
Bestimmen einer dritten Rendering-Reihenfolge für das proprietäre Effektmaterial basierend auf der Materialanordnungsposition in den zweiten Materialinformationen und Bestimmen einer vierten Rendering-Reihenfolge für das gemeinsame Effektmaterial basierend auf der Materialanordnungsposition in den ersten Materialinformationen; wobei die dritte Rendering-Reihenfolge Vorrang vor der vierten Rendering-Reihenfolge hat;
Erzeugen einer Rendering-Verknüpfung basierend auf der dritten und der vierten Rendering-Reihenfolge;
Rendern des gemeinsamen Effektmaterials und des proprietären Effektmaterials jeweils basierend auf der Rendering-Verknüpfung, um das gewünschte Rendering-Ergebnis zu erzeugen.

6. Verfahren nach einem der Ansprüche 3 bis 5, wobei, wenn bestimmt wird, dass der erste Materialtyp des proprietären Effektmaterials nicht mit einem voreingestellten Materialtyp übereinstimmt, das Rendering des gemeinsamen Effektmaterials bzw. des proprietären Effektmaterials jeweils basierend auf einer ersten Materialinformation über das gemeinsame Effektmaterial und einer zweiten Materialinformation über das proprietäre Effektmaterial, um ein Ziel-Rendering-Ergebnis zu erzeugen, umfasst:
Bestimmen einer fünften Rendering-Reihenfolge für das gemeinsame Effektmaterial basierend auf der Materialanordnungsposition in den ersten Materialinformationen und Bestimmen einer sechsten Rendering-Reihenfolge für das proprietäre Effektmaterial basierend auf der Materialanordnungsposition in den zweiten Materialinformationen wobei die fünfte Rendering-Reihenfolge Vorrang vor der sechsten Rendering-Reihenfolge hat;
Erzeugen einer Rendering-Verknüpfung basierend auf der fünften und der sechsten Rendering-Reihenfolge;
Rendern des gemeinsamen Effektmaterials und des proprietären Effektmaterials jeweils basierend auf der Rendering-Verknüpfung, um das gewünschte Rendering-Ergebnis zu erzeugen.

7. Verfahren nach einem der Ansprüche 2 bis 6, wobei das Verfahren vor Erzeugen des Effekts auf einem geteilten Bildschirm basierend auf dem Bildschirmaufteilungsmodell, dem gemeinsamen Effektmaterial und dem Ziel-Teilbildschirmmodell ferner Folgendes umfasst:
als Reaktion auf einen Materialbewegungsvorgang, Bewegen eines Zieleffektmaterials an eine dem Materialbewegungsvorgang entsprechende Zielposition und Bestimmen, basierend auf der Zielposition von Zielmaterialinformationen, die dem bewegten Zieleffektmaterial entsprechen;
wobei es sich bei dem Zieleffektmaterial um das gemeinsame Effektmaterial oder das exklusive Effektmaterial handelt und die Zielposition eine Materialposition ist, die dem Bildschirmaufteilungsmodell untergeordnet ist, oder eine Materialposition, die dem Ziel-Teilbildschirmmodell untergeordnet ist.

8. Verfahren nach Anspruch 7, wobei das Bestimmen der Zielmaterialinformationen, die dem bewegten Zieleffektmaterial entsprechen, basierend auf der Zielposition Folgendes umfasst:
Herstellen einer Assoziationsbeziehung zwischen dem bewegten Zieleffektmaterial und einem Zielmodell, das der Zielposition entspricht; wobei es sich bei dem Zielmodell um das Bildschirmaufteilungsmodell oder das Ziel-Teilbildschirmmodell handelt;
Bestimmen einer Zielanzeigeebene, die dem bewegten Zieleffektmaterial entspricht, basierend auf der Anzeigeebene, die dem Zielmodell entspricht;
Bestimmen, ob es sich bei dem bewegten Zieleffektmaterial um das gemeinsame Effektmaterial oder das proprietäre Effektmaterial handelt, basierend auf der Zielanzeigeebene, und Bestimmen einer Zielmaterialanordnungsposition, die dem bewegten Zieleffektmaterial entspricht, basierend auf der Zielposition.

9. Verfahren nach einem der Ansprüche 1 bis 8, wobei das Verfahren vor Erzeugen des Effekts auf einem geteilten Bildschirm basierend auf dem Bildschirmaufteilungsmodell, dem gemeinsamen Effektmaterial und dem Ziel-Teilbildschirmmodell ferner Folgendes umfasst:
Bestimmen von Komponententypen und einer Komponentenmenge von Rendering-Kamerakomponenten im Bildschirmaufteilungsmodell basierend auf einem zweiten Materialtyp und der Materialmenge des gemeinsamen Effektmaterials, um das Bildschirmaufteilungsmodell zu aktualisieren.

10. Verfahren nach einem der Ansprüche 1 bis 9, wobei, nach Bestimmen als Reaktion auf eine Auslösungsoperation auf einem Teilbildschirm, der in dem Bildschirmaufteilungsmodell beinhaltet ist, eines Ziel-Teilbildschirmmodells und Anzeigen des Ziel-Teilbildschirmmodells auf einer untergeordneten Anzeigeebene des Bildschirmaufteilungsmodells, das Verfahren ferner umfasst:
als Reaktion auf einen Auslösevorgang auf dem Ziel-Teilbildschirmmodell, Anzeigen eines Parametereinstellungsbereichs, der dem Ziel-Teilbildschirmmodell in der Effektproduktionsschnittstelle entspricht;
als Reaktion auf einen Parametereinstellungsvorgang an einem Zielparameter, der im Parametereinstellungsbereich angezeigt wird, Bestimmen eines Zielparameterwerts und Aktualisieren des Ziel-Teilbildschirmmodells basierend auf dem Zielparameterwert.

11. Elektronische Vorrichtung (500), umfassend:
einen Prozessor; und
einen Speicher, der dafür konfiguriert ist, ausführbare Anweisungen zu speichern;
in Verbindung mit einer Anzeige;
wobei der Prozessor dafür konfiguriert ist, die ausführbaren Anweisungen aus dem Speicher zu lesen und die ausführbaren Anweisungen auszuführen, um das Verfahren zum Erzeugen eines Effekts auf einem geteilten Bildschirm nach einem der Ansprüche 1-10 zu implementieren.

12. Computerlesbares Speichermedium, das ein Computerprogramm darauf speichert, wobei das Computerprogramm, wenn es von einem Prozessor ausgeführt wird, den Prozessor veranlasst, das Verfahren zum Erzeugen eines Effekts auf einem geteilten Bildschirm nach einem der Ansprüche 1-10 zu implementieren.

13. Computerprogrammprodukt, umfassend ein Computerprogramm, wobei das Computerprogramm, wenn es von einem Prozessor ausgeführt wird, den Prozessor veranlasst, das Verfahren zum Erzeugen eines Effekts auf einem geteilten Bildschirm nach einem der Ansprüche 1-10 zu implementieren.

## Revendications

1. Procédé de génération d'effet d'écran partagé, comprenant :
l'affichage (S110) d'un modèle d'écran partagé dans une zone d'opération de matériau dans une interface de production d'effets, dans lequel le modèle d'écran partagé est un modèle prédéfini qui divise un écran en au moins deux sous-écrans ;
en réponse à une opération de déclenchement sur un sous-écran inclus dans le modèle d'écran partagé, la détermination (S120) d'un modèle de sous-écran cible et l'affichage du modèle de sous-écran cible à un niveau d'affichage subordonné du modèle d'écran partagé, dans lequel un modèle de sous-écran est un modèle correspondant à un sous-écran partagé ;
en réponse à une première opération de chargement de matériau, le chargement (S130) d'un matériau d'effet commun dans la zone d'opération de matériau et son affichage au niveau d'affichage subordonné du modèle d'écran partagé ; dans lequel le matériau d'effet commun fait référence au même matériau d'effet qui doit être chargé pour être partagé par les modèles de sous-écran cible respectifs, dans lequel le matériau d'effet commun et le modèle de sous-écran cible sont au même niveau d'affichage dans la zone d'opération de matériau du modèle d'écran partagé ;
la génération (S140) de l'effet d'écran partagé sur la base du modèle d'écran partagé, du matériau d'effet commun et du modèle de sous-écran cible.

2. Procédé selon la revendication 1, après avoir déterminé, en réponse à une opération de déclenchement sur un sous-écran inclus dans le modèle d'écran partagé, un modèle de sous-écran cible et affiché le modèle de sous-écran cible à un niveau d'affichage subordonné du modèle d'écran partagé, le procédé comprend en outre :
en réponse à une seconde opération de chargement de matériau, le chargement d'un matériau d'effet exclusif dans la zone d'opération de matériau et son affichage à un niveau d'affichage subordonné du modèle de sous-écran cible ; et
la génération de l'effet d'écran partagé sur la base du modèle d'écran partagé, du matériau d'effet commun et du modèle de sous-écran cible, comprend :
la génération de l'effet d'écran partagé sur la base du modèle d'écran partagé, du matériau d'effet commun, du modèle de sous-écran cible et du matériau d'effet exclusif.

3. Procédé selon la revendication 2, dans lequel, avant la génération de l'effet d'écran partagé sur la base du modèle d'écran partagé, du matériau d'effet commun, du modèle de sous-écran cible et du matériau d'effet exclusif, le procédé comprend en outre :
le rendu du matériau d'effet commun et du matériau d'effet exclusif respectivement sur la base d'une première information de matériau concernant le matériau d'effet commun et d'une seconde information de matériau concernant le matériau d'effet exclusif, afin de générer un résultat de rendu cible ; dans lequel l'information de matériau comprend un premier type de matériau et une position d'agencement de matériau, ou la position d'agencement de matériau ;
l'affichage du résultat de rendu cible dans une zone de présentation des effets de l'interface de production des effets.

4. Procédé selon la revendication 3, dans lequel le rendu du matériau d'effet commun et du matériau d'effet exclusif respectivement sur la base d'une première information de matériau concernant le matériau d'effet commun et d'une seconde information de matériau concernant le matériau d'effet exclusif, afin de générer un résultat de rendu cible, comprend :
en fonction de la position d'agencement de matériau dans la première information de matériau et de la position d'agencement de matériau dans la seconde information de matériau, la détermination d'un premier ordre de rendu pour le matériau d'effet commun et d'un deuxième ordre de rendu pour le matériau d'effet exclusif, et la génération d'un lien de rendu sur la base du premier ordre de rendu et du deuxième ordre de rendu ; dans lequel le lien de rendu est utilisé pour enregistrer les ordres de rendu des matériaux d'effet ;
le rendu du matériau d'effet commun et du matériau d'effet exclusif respectivement sur la base du lien de rendu, afin de générer le résultat de rendu cible.

5. Procédé selon l'une quelconque des revendications 3 à 4, dans lequel, lorsqu'il est déterminé que le premier type de matériau du matériau d'effet exclusif correspond à un type de matériau prédéfini, le rendu du matériau d'effet commun et du matériau d'effet exclusif respectivement sur la base d'une première information de matériau concernant le matériau d'effet commun et d'une seconde information de matériau concernant le matériau d'effet exclusif, afin de générer un résultat de rendu cible, comprend :
la détermination d'un troisième ordre de rendu pour le matériau d'effet exclusif sur la base de la position d'agencement du matériau dans la seconde information de matériau, et la détermination d'un quatrième ordre de rendu pour le matériau d'effet commun sur la base de la position d'agencement du matériau dans la première information de matériau ; dans lequel le troisième ordre de rendu prévaut sur le quatrième ordre de rendu ;
la génération d'un lien de rendu sur la base du troisième ordre de rendu et du quatrième ordre de rendu ;
le rendu du matériau d'effet commun et du matériau d'effet exclusif respectivement sur la base du lien de rendu, afin de générer le résultat de rendu cible.

6. Procédé selon l'une quelconque des revendications 3 à 5, dans lequel, lorsqu'il est déterminé que le premier type de matériau du matériau d'effet exclusif ne correspond pas à un type de matériau prédéfini, le rendu du matériau d'effet commun et du matériau d'effet exclusif respectivement sur la base d'une première information de matériau concernant le matériau d'effet commun et d'une seconde information de matériau concernant le matériau d'effet exclusif, afin de générer un résultat de rendu cible, comprend :
la détermination d'un cinquième ordre de rendu pour le matériau d'effet commun sur la base de la position d'agencement du matériau dans la première information de matériau, et la détermination d'un sixième ordre de rendu pour le matériau d'effet exclusif sur la base de la position d'agencement du matériau dans la seconde information de matériau ; dans lequel le cinquième ordre de rendu prévaut sur le sixième ordre de rendu ;
la génération d'un lien de rendu sur la base du cinquième ordre de rendu et du sixième ordre de rendu ;
le rendu du matériau d'effet commun et du matériau d'effet exclusif respectivement sur la base du lien de rendu, afin de générer le résultat de rendu cible.

7. Procédé selon l'une quelconque des revendications 2 à 6, dans lequel, avant de générer l'effet d'écran partagé sur la base du modèle d'écran partagé, du matériau d'effet commun et du modèle de sous-écran cible, le procédé comprend en outre :
en réponse à une opération de déplacement de matériau, le déplacement d'un matériau d'effet cible vers une position cible correspondant à l'opération de déplacement de matériau, et la détermination de l'information de matériau cible correspondant au matériau d'effet cible déplacé sur la base de la position cible ;
dans lequel le matériau d'effet cible est le matériau d'effet commun ou le matériau d'effet exclusif, et la position cible est une position de matériau subordonnée au modèle d'écran partagé ou une position de matériau subordonnée au modèle de sous-écran cible.

8. Procédé selon la revendication 7, dans lequel la détermination de l'information de matériau cible correspondant au matériau d'effet cible déplacé sur la base de la position cible comprend :
l'établissement d'une relation d'association entre le matériau d'effet cible déplacé et un modèle cible correspondant à la position cible ; dans lequel le modèle cible est le modèle d'écran partagé ou le modèle de sous-écran cible ;
la détermination d'un niveau d'affichage cible correspondant au matériau d'effet cible déplacé sur la base du niveau d'affichage correspondant au modèle cible ;
la détermination du matériau d'effet cible déplacé comme étant le matériau d'effet commun ou le matériau d'effet exclusif sur la base du niveau d'affichage cible, et la détermination d'une position d'agencement du matériau cible correspondant au matériau d'effet cible déplacé sur la base de la position cible.

9. Procédé selon l'une quelconque des revendications 1 à 8, dans lequel, avant de générer l'effet d'écran partagé sur la base du modèle d'écran partagé, du matériau d'effet commun et du modèle de sous-écran cible, le procédé comprend en outre :
la détermination des types de composant et de la quantité de composants de la caméra de rendu dans le modèle d'écran partagé, sur la base d'un second type de matériau et quantité de matériau du matériau d'effet commun, afin de mettre à jour le modèle d'écran partagé.

10. Procédé selon l'une quelconque des revendications 1 à 9, dans lequel, après avoir déterminé, en réponse à une opération de déclenchement sur un sous-écran inclus dans le modèle d'écran partagé, un modèle de sous-écran cible et affiché le modèle de sous-écran cible à un niveau d'affichage subordonné du modèle d'écran partagé, le procédé comprend en outre :
en réponse à une opération de déclenchement sur le modèle de sous-écran cible, l'affichage d'une zone de paramétrage correspondant au modèle de sous-écran cible dans l'interface de production d'effets ;
en réponse à une opération de paramétrage sur un paramètre cible affiché dans la zone de paramétrage, la détermination d'une valeur de paramètre cible et la mise à jour du modèle de sous-écran cible sur la base de la valeur du paramètre cible.

11. Dispositif électronique (500), comprenant :
un processeur ; et
une mémoire configurée pour stocker des instructions exécutables ;
conjointement avec un écran ;
dans lequel le processeur est configuré pour lire les instructions exécutables de la mémoire et exécuter les instructions exécutables afin de mettre en œuvre le procédé de génération d'effet d'écran partagé selon l'une quelconque des revendications 1 à 10.

12. Support de stockage lisible par ordinateur stockant un programme informatique, dans lequel le programme informatique, lorsqu'il est exécuté par un processeur, amène le processeur à mettre en œuvre le procédé de génération d'effet d'écran partagé selon l'une quelconque des revendications 1 à 10.

13. Produit de programme informatique comprenant un programme informatique, dans lequel le programme informatique, lorsqu'il est exécuté par un processeur, amène le processeur à mettre en œuvre le procédé de génération d'effet d'écran partagé selon l'une quelconque des revendications 1 à 10.
